(19) Europäisches Patentamt
European Patent Office
Office européen des brevets

(11) Veröffentlichungsnummer: **0 315 898 B1**

(12) **EUROPÄISCHE PATENTSCHRIFT**

(45) Veröffentlichungstag der Patentschrift: **20.01.93**

(51) Int. Cl.$^5$: **C09B 29/039**, C09B 29/42, D06P 1/18

(21) Anmeldenummer: **88118344.6**

(22) Anmeldetag: **04.11.88**

Die Akte enthält technische Angaben, die nach dem Eingang der Anmeldung eingereicht wurden und die nicht in dieser Patentschrift enthalten sind.

(54) **Isothiazolazofarbstoffe.**

(30) Priorität: **12.11.87 DE 3738372**

(43) Veröffentlichungstag der Anmeldung:
**17.05.89 Patentblatt 89/20**

(45) Bekanntmachung des Hinweises auf die Patenterteilung:
**20.01.93 Patentblatt 93/03**

(84) Benannte Vertragsstaaten:
**CH DE FR GB IT LI**

(56) Entgegenhaltungen:
**EP-A- 0 135 131**
**DE-A- 2 033 281**
**DE-A- 3 433 958**

(73) Patentinhaber: **BASF Aktiengesellschaft**
**Carl-Bosch-Strasse 38**
**W-6700 Ludwigshafen(DE)**

(72) Erfinder: **Hansen, Guenter, Dr.**
**Alwin-Mittasch-Platz 8**
**W-6700 Ludwigshafen(DE)**
Erfinder: **Schefczik, Ernst, Dr.**
**Dubliner Strasse 7**
**W-6700 Ludwigshafen(DE)**
Erfinder: **Reichelt, Helmut, Dr.**
**Johann-Gottlieb-Fiechte-Strasse 56**
**W-6730 Neustadt(DE)**

EP 0 315 898 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Isothiazolazofarbstoffe, die ein 5-Aminoisothiazolderivat als Diazokomponente und ein 6-Hydroxypyrid-2-onderivat als Kupplungskomponente aufweisen, sowie ihre Verwendung zum Färben von synthetischen Fasern.

Aus der DE-A-3 433 958 sind bereits Isothiazolazofarbstoffe bekannt, die 3-Methyl-4-nitro-5-aminoisothiazol als Diazokomponente aufweisen.

Aufgabe der vorliegenden Erfindung war es nun, neue nitrogruppenfreie Isothiazolazofarbstoffe bereitzustellen, die vorteilhafte anwendungstechnische Eigenschaften aufweisen.

Weiterhin sind aus der EP-A-135 131 Azofarbstoffe bekannt, die eine Diazokomponente aus der 5-Aminoisothiazolreihe und eine Kupplungskomponente aus der Diaminopyridinreihe aufweisen.

Schließlich beschreibt die EP-A-201 896 Azofarbstoffe mit einer Diazokomponente aus der 2-Aminothiophenreihe.

Es wurden Isothiazolazofarbstoffe der Formel I

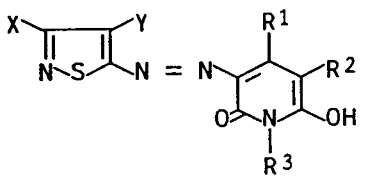

(I)

gefunden, in der

X gegebenenfalls substituiertes $C_1$-$C_8$-Alkyl oder gegebenenfalls substituiertes Phenyl,

Y Wasserstoff, Cyano, Chlor oder Brom,

$R^1$ Wasserstoff, $C_1$-$C_4$-Alkyl oder Phenyl,

$R^2$ Wasserstoff, Cyano, Carbamoyl, $C_1$-$C_4$-Mono- oder Dialkylcarbamoyl, $C_1$-$C_6$-Alkanoyl, $C_1$-$C_6$-Alkoxycarbonyl oder 2-($C_1$-$C_4$-Alkoxy)ethoxycarbonyl und

$R^3$ Wasserstoff, gegebenenfalls substituiertes und/oder durch ein oder zwei Sauerstoffatome unterbrochenes $C_1$-$C_8$-Alkyl, $C_5$-$C_7$-Cycloalkyl, $C_3$-$C_6$-Alkenyl oder Phenyl bedeuten.

Alle in den obengenannten Resten auftretenden Alkylgruppen können sowohl geradkettig als auch verzweigt sein.

Wenn der Rest X substituiertes $C_1$-$C_8$-Alkyl bedeutet, kommen als Substituenten z. B. Chlor, Brom, Cyano, Hydroxy, $C_1$-$C_4$-Alkoxy, Phenoxy, $C_1$-$C_4$-Alkoxycarbonyl oder gegebenenfalls durch $C_1$-$C_4$-Alkyl, $C_1$-$C_4$-Alkoxy, Chlor, Brom oder Cyano substituiertes Phenyl in Betracht.

Wenn der Rest X substituiertes Phenyl bedeutet, kommen als Substituenten beispielsweise $C_1$-$C_4$-Alkyl, Hydroxy, $C_1$-$C_4$-Alkoxy, Phenoxy, Chlor, Brom, $C_1$-$C_4$-Alkoxycarbonyl, Cyano oder $C_1$-$C_4$-Dialkylaminosulfonyl in Betracht.

Für den Fall, daß der Rest $R^3$ für substituiertes $C_1$-$C_8$-Alkyl, das gegebenenfalls durch ein oder zwei Sauerstoffatome unterbrochen ist, steht, kommen als Substituenten z. B. Phenyl, Cyano, $C_1$-$C_8$-Alkoxycarbonyl, Phenoxycarbonyl, Halogen insbesondere Chlor oder Brom, Hydroxy, $C_1$-$C_8$-Alkanoyloxy, Benzoyloxy, $C_5$-$C_7$-Cycloalkoxy, oder Phenoxy in Betracht.

Reste X, $R^1$ und $R^3$ sind beispielsweise Methyl, Ethyl, Propyl, Isopropyl, Butyl, Isobutyl, sec-Butyl oder tert-Butyl.

Reste X und $R^3$ sind weiterhin, z. B. Pentyl, Isopentyl, Neopentyl, tert-Pentyl, Hexyl, Heptyl, Octyl oder 2-Ethylhexyl.

Reste X sind weiterhin, z. B. 2-Chlorethyl, 2-Bromethyl, Cyanomethyl, 2-Cyanoethyl, 2-Hydroxyethyl, 2- oder 3-Hydroxypropyl, 2-Methoxyethyl, 2-Ethoxyethyl, 2-Propoxyethyl, 2-Butoxyethyl, 2-Phenoxyethyl, Methoxycarbonylmethyl, Ethoxycarbonylmethyl, 2-Methoxycarbonylethyl, 2-Ethoxycarbonylethyl, Benzyl, 1- oder 2-Phenylethyl, o-, m- oder p-Methylbenzyl, o,- m-, oder p-Brombenzyl, o-, m- oder p-Chlorbenzyl, o-, m- oder p-Methoxybenzyl, o-, m- oder p-Ethoxybenzyl, o-, m-, oder p-Cyanobenzyl, Phenyl, o-, m- oder p-Methylphenyl, o-, m- oder p-Methoxyphenyl, o-, m- oder p-Ethoxyphenyl, o-, m- oder p-Chlorphenyl, o-, m- oder p-Bromphenyl, o-, m- oder p-Hydroxyphenyl, p-Phenoxyphenyl, o-, m- oder p-Cyanophenyl, p-Dimethylaminosulfonylphenyl oder p-Diethylaminosulfonylphenyl.

Einzelne Reste $R^3$ sind weiterhin z. B. 2-Methoxyethyl, 2-Ethoxyethyl, 2-Propoxyethyl, 2-Butoxyethyl, 2-Methoxypropyl, 3-Methoxypropyl, 3-Ethoxypropyl, 2-Methoxybutyl, 4-Methoxybutyl, 2-Ethoxybutyl, 4-Ethoxybutyl, 3,6-Dioxaheptyl, 3,6-Dioxaoctyl, Benzyl, 1- oder 2-Phenylethyl, 8-Phenyl-4,7-dioxaoctyl, 2-Cyanoethyl, 3-Cyanopropyl, 4-Cyanobutyl, 5-Cyano-3-oxapentyl, 6-Cyano-4-oxahexyl, 8-Cyano-4-oxahexyl, 2-Hydroxyethyl, 2- oder 3-Hydroxypropyl, 2,3-Dihydroxypropyl, 2-Hydroxybutyl, 4-Hydroxybutyl, 5-Hydroxy-3-oxapentyl, 6-Hydroxy-4-oxahexyl, 8-Hydroxy-4-oxaoctyl, 8-Hydroxy-3,6-dioxaoctyl, 2-Phenyl-2-hydroxethyl, 2-Chlorethyl, 2-Bromethyl, 2-Phenoxyethyl, 3-Phenoxypropyl, 4-Phenoxybutyl, 5-Phenoxy-3-oxapentyl, 6-Phenoxy-4-oxahexyl, 8-Phenoxy-4-oxaoctyl, 2-Cyclohexyloxyethyl, 3-Cyclohexyloxypropyl, 4-Cyclohexyloxybutyl, 5-Cyclohexyloxy-3-oxapentyl, 6-Cyclohexyloxy-4-oxahexyl, 8-Cyclohexyloxy-4-oxaoctyl, 2-Methoxycarbonylethyl, 2-Ethoxycarbonylethyl, 3-Methoxycarbonylpropyl, 3-Ethoxycarbonylpropyl, 4-Methoxycarbonylbutyl, 4-Ethoxycarbonylbutyl, 5-Methoxycarbonyl-3-oxapentyl, 6-Methoxycarbonyl-4-oxahexyl, 8-Methoxycarbonyl-4-oxaoctyl, 2-Phenoxycarbonylethyl, 2- oder 3-Phenoxycarbonylpropyl, 4-Phenoxycarbonylbutyl, 5-Phenoxycarbonyl-3-oxapentyl, 6-Phenoxycarbonyl-4-oxahexyl, 8-Phenoxycarbonyl-4-oxaoctyl, 2-Formyloxyethyl, 2-Acetyloxyethyl, 2-Propionyloxyethyl, 2-Butyryloxyethyl, 2-(2-Ethylhexanoyloxy)ethyl, 2- oder 3-Acetyloxypropyl, 2- oder 3-Propionyloxypropyl, 2- oder 3-(2-Ethylhexanoyloxy)propyl, 4-Acetyloxybutyl, 4-Propionyloxybutyl, 4-(2-Ethylhexanoyloxy)butyl, 5-Acetyloxy-3-oxapentyl, 5-Propionyloxy-3-oxapentyl, 5-(2-Ethylhexanoyloxy)-3-oxapentyl, 6-Acetyloxy-4-oxahexyl, 6-Propionyloxy-4-oxahexyl, 6-(2-Ethylhexanoyloxy)-4-oxahexyl, 8-Acetyloxy-4-oxaoctyl, 8-Propionyloxy-4-oxaoctyl, 8-(2-Ethylhexanoyloxy)-4-oxaoctyl, 2-Benzoyloxyethyl, 2- oder 3-Benzoyloxypropyl, 4-Benzoyloxybutyl, 5-Benzoyloxy-3-oxapentyl, 6-Benzoyloxy-4-oxahexyl, 8-Benzoyloxy-4-oxaoctyl, Cyclopentyl, Cyclohexyl, Cycloheptyl, Phenyl, Allyl oder Methallyl.

Reste $R^2$ sind neben den bereits genannten z.B. Mono- oder Dimethylcarbamoyl, Mono- oder Diethylcarbamoyl, Mono- oder Dipropylcarbamoyl, Mono- oder Diisopropylcarbamoyl, Mono- oder Dibutylcarbamoyl, N-Methyl-N-ethylcarbamoyl, Formyl, Acetyl, Propionyl, Butyryl, Isobutyryl, Pentanoyl, Hexanoyl, Methoxycarbonyl, Ethoxycarbonyl, Propoxycarbonyl, Isopropoxycarbonyl, Butoxycarbonyl, Isobutoxycarbonyl, sec-Butoxycarbonyl, 2-Methoxyethoxycarbonyl, 2-Ethoxyethoxycarbonyl, 2-Propoxyethoxycarbonyl, 2-Isopropoxyethoxycarbonyl, 2-Butoxyethoxycarbonyl, 2-Isobutoxyethoxycarbonyl oder 2-sec-Butoxyethoxycarbonyl.

Bevorzugt sind Isothiazolazofarbstoffe der Formel I, in der

X Phenyl oder Benzyl, das jeweils gegebenenfalls durch Methyl, Methoxy, Ethoxy oder Chlor substituiert ist, oder $C_1$-$C_4$-Alkyl,
$R^1$ Methyl und
$R^2$ Wasserstoff, Cyano, Carbamoyl oder $C_1$-$C_4$-Alkoxycarbonyl bedeuten und
Y und $R^3$ jeweils die obengenannte Bedeutung besitzen.

Von besonderer Bedeutung sind Farbstoffe der Formel I, in der

X Phenyl oder Benzyl, das jeweils gegebenenfalls durch Methyl, Methoxy, Ethoxy oder Chlor substituiert ist, oder $C_1$-$C_4$-Alkyl,
$R^1$ Methyl,
$R^2$ Cyano und
$R^3$ gegebenenfalls substituiertes und/oder durch ein oder zwei Sauerstoffatome unterbrochenes $C_1$-$C_8$-Alkyl oder $C_3$-$C_6$-Alkenyl bedeuten und
Y die obengenannte Bedeutung besitzt.

Zur Herstellung der erfindungsgemäßen Isothiazolazofarbstoffe der Formel I kann man eine nach an sich bekannten Verfahren erhältliche Diazoniumverbindung von Aminen der Formel II

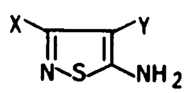

(II),

in der X und Y jeweils die obengenannte Bedeutung besitzen, mit einem 6-Hydroxypryrid-2-onderivat der Formel III

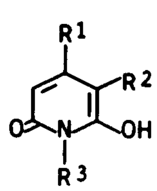

(III),

in der $R^1$, $R^2$ und $R^3$ jeweils die obengenannte Bedeutung besitzen, nach an sich bekannten Methoden

umsetzen. Weitere Einzelheiten der Herstellung können den Beispielen entnommen werden.

Die erfindungsgemäßen Farbstoffe eignen sich vorzugsweise zum Färben von synthetischen Fasern, beispielsweise Polyester, Polyamide, Celluloseester oder Mischgewebe aus Polyestern und Cellulosefasern. Insbesondere sind sie zum Färben von Polyester geeignet. Sie ergeben Färbungen in gelben Tönen und zeichnen sich durch gute Lichtechtheit und gutes Ziehvermögen aus. Teilweise sind sie auch für das Transferdruck-Verfahren geeignet.

Die folgenden Beispiele, in denen sich Angaben über Prozente, sofern nicht anders vermerkt, auf das Gewicht beziehen, sollen die Erfindung näher erläutern.

Beispiel 1

5,05 g 5-Amino-4-cyano-3-phenylisothiazol wurden in 37,5 ml eines Gemischs aus Eisessig und Propionsäure (17:3 V/V) in der Wärme gelöst. Bei 10 bis 20 °C wurden 10 ml 85 %ige Schwefelsäure und danach bei 0 bis 5 °C 4,3 ml Nitrosylschwefelsäure (11,5 % $N_2O_3$) zugetropft. Anschließend wurde 4 Stunden bei 0 bis 5 °C nachgerührt.

Zu 6,0 g 1-Butyl-3-cyano-6-hydroxy-4-methylpyrid-2-on in 30 ml N,N-Dimethylformamid, 100 g Eis und 0,5 g Amidosulfonsäure wurde die oben hergestellte Diazoniumsalzlösung bei 0 °C getropft. Nach 4 Stunden Rühren bei 0 bis 5 °C wurde das Reaktionsgemisch langsam auf Raumtemperatur erwärmt, abgesaugt und der Niederschlag gewaschen und getrocknet. Man erhielt 7,7 g des Farbstoffs der Formel

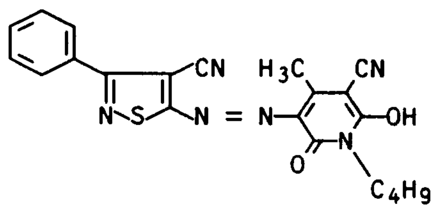

der Polyestermaterial in echten, gelben Tönen färbt
(λmax($CH_2Cl_2$): 427 nm).

Beispiel 2

4,8 g 5-Amino-4-brom-3-methylisothiazol wurden in 20 ml Wasser und 10 ml verdünnter Salzsäure bei 10 °C mit 1,7 g Natriumnitrit, gelöst in 5 ml Wasser, versetzt. Nach 2 Stunden Rühren bei 10 bis 15 °C wurden 150 g Eis und 0,5 g Amidosulfonsäure zugegeben. Bei 0 bis 5 °C wurde dann eine Lösung von 5,8 g 3-Cyano-6-hydroxy-1,4-dimethylpyrid-2-on in 70 ml Wasser, deren pH-Wert mit Soda auf 9 eingestellt wurde, zugetropft. Nach der Aufarbeitung, die analog Beispiel 1 erfolgte, wurden 8,3 g einer Mischung der Farbstoffe der Formel

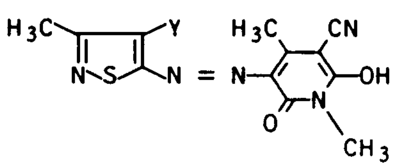

in der

Y für Chlor und Brom steht, isoliert.

Die Farbstoffmischung färbt Polyester in echten gelben Tönen
(λmax($CH_2Cl_2$): 437 nm).

Beispiel 3

3,75 g 5-Amino-3-methylisothiazol-hydrochlorid wurden in 40 ml Wasser, 10 ml verdünnter Salzsäure und 25 g Eis mit 1,7 g Natriumnitrit, gelöst in 5 ml Wasser, versetzt und 2 Stunden bei 0 bis 5 °C gerührt. Die Kupplungsreaktion, die analog Beispiel 2, jedoch mit 6,0 g 1-Butyl-3-cyano-6-hydroxy-4-methylpyrid-2-on als Kupplungskomponente durchgeführt wurde, ergab nach der üblichen Aufarbeitung 6,9 g des Farbstoffs der Formel

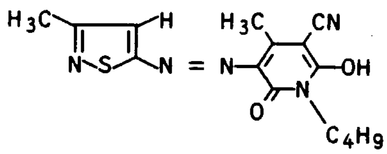

der Polyestermaterial in echten, gelben Tönen färbt
(λmax($CH_2Cl_2$): 432 nm).

In analoger Weise werden die in der folgenden Tabelle aufgeführten Farbstoffe erhalten, die Polyestermaterial in gelben Tönen färben.

Tabelle

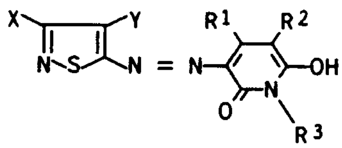

| Bsp.-Nr. | X | Y | $R^1$ | $R^2$ | $R^3$ |
|---|---|---|---|---|---|
| 4 | $C_6H_5CH_2$ | CN | $CH_3$ | CN | $CH_3$ |
| 5 | $C_6H_5CH_2$ | CN | $CH_3$ | CN | $C_4H_9$ |
| 6 | p-$CH_3OC_6H_4CH_2$ | CN | $CH_3$ | CN | $C_3H_6O$– 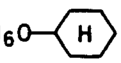 |
| 7 | p-$CH_3OC_6H_4CH_2$ | CN | $CH_3$ | CN | $C_3H_7$ |
| 8 | p-$CH_3C_6H_4CH_2$ | CN | $CH_3$ | CN | $CH_3$ |
| 9 | p-$CH_3C_6H_4CH_2$ | CN | $CH_3$ | CN | $CH_2CH(C_2H_5)C_4H_9$ |
| 10 | $CH_3$ | CN | $CH_3$ | CN | $C_6H_{13}$ |
| 11 | $CH_3$ | CN | $CH_3$ | CN | $C_3H_6O-C_6H_5$ |
| 12 | $CH_3$ | CN | $CH_3$ | CN | $C_2H_5$ |
| 13 | $C_6H_5$ | CN | $CH_3$ | CN | $CH_3$ |
| 14 | $C_6H_5$ | CN | $CH_3$ | CN | $C_3H_7$ |
| 15 | $C_6H_5$ | CN | $CH_3$ | CN | $C_3H_6O$– 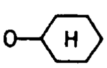 |
| 16 | $CH(CH_3)_2$ | CN | $CH_3$ | CN | $C_3H_6OC_2H_4OC_6H_5$ |

Tabelle - Fortsetzung

| Bsp.-Nr. | X | Y | $R^1$ | $R^2$ | $R^3$ |
|---|---|---|---|---|---|
| 17 | $CH(CH_3)_2$ | CN | $CH_3$ | CN | $C_4H_9$ |
| 18 | p-$CH_3OC_6H_4$ | CN | $CH_3$ | CN | $CH_3$ |
| 19 | p-$CH_3C_6H_4$ | CN | $CH_3$ | CN | $C_3H_7$ |
| 20 | $CH_3$ | Br | $CH_3$ | CN | $C_4H_9$ |
| 21 | $CH_3$ | Br | $CH_3$ | CN | $CH_2CH(C_2H_5)C_4H_9$ |
| 22 | $CH_3$ | Cl | $CH_3$ | CN | $CH_3$ |
| 23 | $CH_3$ | Cl | $CH_3$ | CN | $C_6H_{13}$ |
| 24 | $CH_3$ | Cl | $CH_3$ | CN | $C_4H_9$ |
| 25 | $CH_3$ | H | $CH_3$ | CN | $CH_3$ |
| 26 | $CH_3$ | H | $CH_3$ | CN | $C_3H_7$ |
| 27 | $CH_3$ | H | $CH_3$ | CN | $C_3H_6O$ 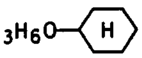 |
| 28 | $C_6H_5$ | CN | H | CN | $CH_3$ |
| 29 | $CH_3$ | CN | H | $CONHC_3H_7$ | $C_3H_7$ |
| 30 | $CH_3$ | Br | H | $CONHC_3H_7$ | $C_3H_7$ |
| 31 | $C_6H_5CH_2$ | CN | $CH_3$ | H | $C_2H_5$ |
| 32 | $C_3H_7$ | CN | $CH_3$ | H | $C_2H_5$ |
| 33 | $CH_3$ | Cl | $CH_3$ | H | $C_2H_5$ |
| 34 | $CH_3$ | H | $CH_3$ | H | $C_2H_5$ |
| 35 | p-$CH_3OC_6H_4CH_2$ | CN | $CH_3$ | $CONH_2$ | $CH_3$ |
| 36 | $C_6H_5$ | CN | $CH_3$ | $CONH_2$ | $CH_3$ |
| 37 | p-Cl-$C_6H_4$ | CN | $CH_3$ | $CONH_2$ | $CH_3$ |
| 38 | $CH_3$ | Br | $CH_3$ | $CONH_2$ | $CH_3$ |
| 39 | $CH_3$ | CN | $CH_3$ | $CONH_2$ | $CH_2CH(C_2H_5)C_4H_9$ |
| 40 | $C_6H_5$ | CN | $CH_3$ | $CO_2C_2H_5$ | $C_4H_9$ |
| 41 | $CH_3$ | CN | $CH_3$ | $CO_2C_2H_5$ | $C_4H_9$ |
| 42 | $CH_3$ | Br | $CH_3$ | $CO_2C_2H_5$ | $C_4H_9$ |
| 43 | $CH_3$ | Br | $CH_3$ | CN | H |
| 44 | $C_6H_5CH_2$ | CN | $CH_3$ | CN | H |
| 45 | $C_6H_5$ | CN | $CH_3$ | CN | $CH_2CH{=}CH_2$ |
| 46 | $CH_3$ | CN | $CH_3$ | CN | $CH(CH_3)_2$ |
| 47 | $CH_3$ | Br | $CH_3$ | CN | $CH(CH_3)_2$ |

## Patentansprüche

1. Isothiazolazofarbstoffe der Formel I

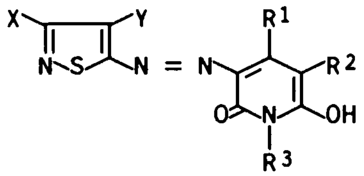

(I),

in der

X gegebenenfalls substituiertes $C_1$-$C_8$-Alkyl oder gegebenenfalls substituiertes Phenyl,

Y Wasserstoff, Cyano, Chlor oder Brom,

$R^1$ Wasserstoff, $C_1$-$C_4$-Alkyl oder Phenyl,

$R^2$ Wasserstoff, Cyano, Carbamoyl, $C_1$-$C_4$-Mono- oder Dialkylcarbamoyl, $C_1$-$C_6$-Alkanoyl, $C_1$-$C_6$-Alkoxycarbonyl oder 2-($C_1$-$C_4$-Alkoxy)ethoxycarbonyl und

$R^3$ Wasserstoff, gegebenenfalls substituiertes und/oder durch ein oder zwei Sauerstoffatome unterbrochenes $C_1$-$C_8$-Alkyl, $C_5$-$C_7$-Cycloalkyl, $C_3$-$C_6$-Alkenyl oder Phenyl bedeuten.

**2.** Isothiazolazofarbstoffe gemäß Anspruch 1, dadurch gekennzeichnet, daß

X Phenyl oder Benzyl, das jeweils gegebenenfalls durch Methyl, Methoxy, Ethoxy oder Chlor substituiert ist, oder $C_1$-$C_4$-Alkyl,

$R^1$ Methyl und

$R^2$ Wasserstoff, Cyano, Carbamoyl oder $C_1$-$C_4$-Alkoxycarbonyl bedeuten und

Y und $R^3$ jeweils die in Anspruch 1 genannte Bedeutung besitzen.

**3.** Isothiazolazofarbstoffe gemäß Anspruch 1, dadurch gekennzeichnet, daß

X Phenyl oder Benzyl, das jeweils gegebenenfalls durch Methyl, Methoxy, Ethoxy oder Chlor substituiert ist, oder $C_1$-$C_4$-Alkyl,

$R^1$ Methyl,

$R^2$ Cyano und

$R^3$ gegebenenfalls substituiertes und/oder durch ein oder zwei Sauerstoffatome unterbrochenes $C_1$-$C_8$-Alkyl oder $C_3$-$C_6$-Alkenyl bedeuten und

Y die in Anspruch 1 genannte Bedeutung besitzt.

**4.** Verwendung der Isothiazolazofarbstoffe gemäß Anspruch 1 zum Färben von synthetischen Fasern.

## Claims

**1.** An isothiazoleazo dye of the formula I

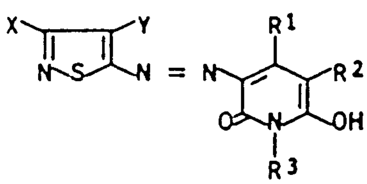

(I),

where

X is substituted or unsubstituted $C_1$-$C_8$-alkyl or substituted or unsubstituted phenyl,

Y is hydrogen, cyano, chlorine or bromine,

$R^1$ is hydrogen, $C_1$-$C_4$-alkyl or phenyl,

$R^2$ is hydrogen, cyano, carbamoyl, monodi($C_1$-$C_4$-alkyl)carbamoyl, $C_1$-$C_6$-alkanoyl, $C_1$-$C_6$-alkoxycarbonyl or 2-($C_1$-$C_4$-alkoxy)-ethoxycarbonyl, and

$R^3$ is hydrogen, $C_1$-$C_8$-alkyl, which may be substituted and/or interrupted by one or two oxygen atoms, or is $C_5$-$C_7$-cycloalkyl, $C_3$-$C_6$-alkenyl or phenyl.

**2.** An isothiazoleazo dye as claimed in claim 1, wherein

X is phenyl or benzyl, which may each be substituted by methyl, methoxy, ethoxy or chlorine, or is $C_1$-$C_4$-alkyl,

$R^1$ is methyl,
$R^2$ is hydrogen, cyano, carbamoyl or $C_1$-$C_4$-alkoxycarbonyl, and
Y and $R^3$ are each as defined in claim 1.

3. An isothiazoleazo dye as claimed in claim 1, wherein
X is phenyl or benzyl, which may each be substituted by methyl, methoxy, ethoxy or chlorine, or is $C_1$-$C_4$-alkyl,
$R^1$ is methyl,
$R^2$ is cyano,
$R^3$ is $C_1$-$C_8$-alkyl, which may be substituted and/or interrupted by one or two oxygen atoms, or is $C_3$-$C_6$-alkenyl and
Y is as defined in claim 1.

4. The use of an isothiazoleazo dye as claimed in claim 1, for dyeing synthetic fibers.

**Revendications**

1. Colorants azoïques de la série de l'isothiazole de formule I

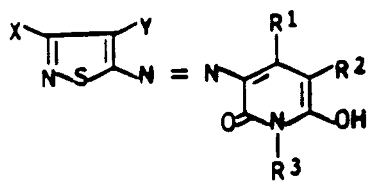

(I),

dans laquelle
X représente un reste alkyle en $C_1$-$C_8$ éventuellement substitué ou phényle éventuellement substitué,
Y représente un atome d'hydrogène, un groupement cyano ou un atome de chlore ou de brome,
$R^1$ représente un atome d'hydrogène ou un reste alkyle en $C_1$-$C_4$ ou phényle,
$R^2$ représente un atome d'hydrogène ou un groupement cyano, carbamoyle, $C_1$-$C_4$-mono- ou dialkylcarbamoyle, $C_1$-$C_6$-alcanoyle, $C_1$-$C_6$-alcoxycarbonyle ou 2-($C_1$-$C_4$-alcoxy)-éthoxyocarbonyle,et
$R^3$ représente un atome d'hydrogène ou un reste alkyle en $C_1$-$C_8$, cycloalkyle en $C_5$-$C_7$, alcényle en $C_3$-$C_6$ ou phényle éventuellement substitué et/ou interrompu par un ou deux atomes d'oxygéne.

2. Colorants azoïques de la série de l'isothiazole selon la revendication 1, caractérisés en ce que
X représente un reste phényle ou benzyle qui est éventuellement substitué par un groupement méthyle, méthoxy, éthoxy ou par un atome de chlore, ou un reste alkyle en $C_1$-$C_4$,
$R^1$ représente un reste méthyle,
$R^2$ représente un atome d'hydrogène ou un groupement cyano, carbamoyle ou $C_1$-$C_4$-alcoxycarbonyle,
et
Y et $R^3$ ont chacun la signification indiquée dans la revendication 1.

3. Colorants azoïques de la série de l'isothiazole selon la revendication 1, caractérisés en ce que
X représente un reste phényle ou benzyle qui est éventuellement substitué par un groupement méthyle, méthoxy, éthoxy ou par un atome de chlore, ou un reste alkyle en $C_1$-$C_4$,
$R^1$ représente un reste méthyle,
$R^2$ représente un groupement cyano,
$R^3$ représente un reste alkyle en $C_1$-$C_8$ ou alcényle en $C_3$-$C_6$ éventuellement substitué et/ou interrompu par un ou deux atomes d'oxygène et
Y a la signification indiquée dans la revendication 1.

4. Utilisation des colorants azoïques de la série de l'isothiazole selon la revendication 1 pour la teinture de fibres synthétiques.